# EUROPÄISCHE PATENTSCHRIFT

(11) **EP 3 322 607 B1**
(45) Veröffentlichungstag und Bekanntmachung des Hinweises auf die Patenterteilung: **24.04.2019**
(21) Anmeldenummer: 16728684.8
(22) Anmeldetag: 13.06.2016
(51) Int. Cl.: B60K 7/00, B60G 21/05

(54) **ANTREIBBARE VERBUNDLENKERACHSE MIT EINEM QUERPROFIL UND JEWEILS ENDSEITIG DES QUERPROFILS DAMIT VERBUNDENEN LÄNGSLENKERN**
DRIVABLE TWIST-BEAM REAR AXLE HAVING A TRANSVERSE PROFILED ELEMENT AND LONGITUDINAL CONTROL ARMS CONNECTED TO THE TRANSVERSE PROFILED ELEMENT AT THE ENDS THEREOF
ESSIEU SEMI-RIGIDE ENTRAÎNABLE COMPORTANT UN PROFILÉ TRANSVERSAL ET DES BRAS OSCILLANTS LONGITUDINAUX RESPECTIVEMENT RELIÉS AU PROFILÉ TRANSVERSAL SUR LE CÔTÉ D'EXTRÉMITÉ DE CELUI-CI

(30) Priorität: 16.07.2015 DE 102015213357
(43) Veröffentlichungstag der Anmeldung: 23.05.2018
(73) Patentinhaber: ZF Friedrichshafen AG, 88046 Friedrichshafen (DE)
(72) Erfinder: NORDLOH, Alfons, 49429 Visbek (DE); BEYER, Michael, 32457 Porta Westfalica (DE); WULF, Markus, 32479 Hille (DE); HOLTHEIDE, Josef, 49434 Neuenkirchen (DE); KALLASS, Felix, 49084 Osnabrück (DE)
(86) Internationale Anmeldenummer: PCT/EP2016/063424
(87) Internationale Veröffentlichungsnummer: WO 2017/008965

(56) Entgegenhaltungen:
- EP-A1- 2 340 953
- DE-A1-102011 005 625
- DE-A1-102011 009 040
- DE-A1-102011 080 037
- DE-A1-102011 080 236
- DE-A1-102011 082 390

## Beschreibung

Die Erfindung betrifft eine antreibbare Verbundlenkerachse mit einem Querprofil und jeweils endseitig des Querprofils damit verbundenen Längslenkern gemäß der im Oberbegriff des Patentanspruches 1 näher definierten Art.

Aus der DE 10 2011 080 037 A1 ist eine Fahrzeugachse für ein Kraftfahrzeug bzw. eine Verbundlenkerachse für ein Elektrofahrzeug bekannt. Die Fahrzeugachse umfasst zumindest einen Längslenker, an dem eine radnahe Antriebseinheit mit einer elektrischen Maschine und mit einer Getriebeeinheit angeordnet ist. Die radnahe Antriebseinheit ist zumindest teilweise als Längslenker ausgebildet. Bei einer Ausführungsform der Fahrzeugachse weist die Antriebseinheit ein zumindest zweiteiliges Gehäuse auf, welches eine radseitige und eine längslenkerseitige Gehäusehälfte umfasst.

Eine Antriebsvorrichtung zum Antreiben eines Rades einer Verbundlenkerachse für ein elektrisch antreibbares Fahrzeug offenbart die DE 10 2011 005 625 A1. Die Antriebsvorrichtung umfasst eine elektrische Maschine und ein in Kraftflussrichtung im Zugbetrieb betrachtet abtriebsseitig der elektrischen Maschine geschaltetes Getriebe. Das Gehäuse der elektrischen Maschine oder das Gehäuse des Getriebes sind direkt mit dem Längslenker der Fahrzeugachse verschraubt oder als mehrteiliges Schweissbauteil in den Längslenker integriert. Zusätzlich besteht auch die Möglichkeit, dass das Gehäuse der elektrischen Maschine oder das Gehäuse des Getriebes mit dem Längslenker einteilig ausgeführt sind, wobei die elektrische Maschine und das Getriebe ein gemeinsames Gehäuse aufweisen können.

In der DE 10 2011 080 236 A1 ist eine Antriebsvorrichtung für ein einzelnes Rad eines Kraftfahrzeugs beschrieben, die ein elektrisches Antriebsmittel mit zumindest einer Antriebswelle für das Rad und ein Getriebe umfasst. Das Getriebe wirkt mit der zumindest einen Antriebswelle zur Übertragung von Drehmoment zum Antrieb des Rades zusammen. In einem Gehäuse des elektrischen Antriebsmittels bzw. des Elektromotors wird der Elektromotor, ein Energiespeicher, die Antriebswelle, eine Sperreinrichtung sowie ein als Planetengetriebe ausgeführtes Getriebe angeordnet. Eine Ritzel-Stirnrad-Anordnung, eine Ausgangswelle und ein Teil einer Verbindungswelle sowie ein Radlager sind in einem radseitigen Gehäuse angeordnet, welches mit dem Gehäuse des Elektromotors verbunden ist. Weiterhin sind im Bereich des Rades in bereits bekannter Weise ein Radträger sowie eine Bremse angeordnet. Die Bremse dient im laufenden Betrieb eines Kraftfahrzeugs als Betriebsbremse zum Abbremsen des Fahrzeugs. Insgesamt ist zumindest ein Teil des Gehäuses des Elektromotors und des Getriebes als Längslenker der Verbundlenkerachse ausgebildet, die über Verbundlenkerlager am Kraftfahrzeug drehbar gelagert angeordnet ist.

Aus der gattungsgemäßen DE 10 2011 082 390 A1 ist ein Verfahren zur Herstellung eines Längslenkers einer Verbundlenkerachse bekannt, in den eine Antriebseinheit eines radnahen elektrischen Antriebs integriert ist, der eine elektrische Maschine und ein Getriebe umfasst. Über das Verfahren wird der Längslenker als Gussteil mit einem Kastenprofil hergestellt, wobei die Konturen zur Darstellung des Bereiches zur Aufnahme des Getriebes, der Verbindungsstelle mit der Karosserie, der Bohrung zur Aufnahme des Querprofils, welches die beiden Längslenker der Verbundlenkerachse miteinander verbindet, des U-Profils des Längslenkers, des Kastenprofils und des Bereiches zur Aufnahme der elektrischen Maschine mittels Kernen abgebildet werden. Weitere Konturen zur Darstellung der Verbindungsstelle des Längslenkers mit der Karosserie, der Bohrung zur Aufnahme des Querprofils und des U-Profils des Längslenkers werden mittels eines gemeinsamen Kernes abgebildet.

Über das vorbeschriebene Verfahren hergestellte Längslenker sind jedoch aufgrund der verlorenen Kerne durch hohe Herstellkosten gekennzeichnet. Zusätzlich ist bei allen vorstehend aufgeführten und aus dem Stand der Technik bekannten Verbundlenkerachsen bei Wartungs- bzw. Servicearbeiten jeweils der gesamte Längslenker nach und nach zu demontieren, bis alle Komponenten der elektrischen Maschinen und Getriebe umfassenden Antriebsstränge der antreibbaren Verbundlenkerachsen zugänglich sind.

Der vorliegenden Erfindung liegt daher die Aufgabe zugrunde, eine durch geringe Herstellkosten und einen niedrigen Wartungsaufwand gekennzeichnete antreibbare Verbundlenkerachse zur Verfügung zu stellen.

Erfindungsgemäß wird diese Aufgabe mit einer antreibbaren Verbundlenkerachse mit den Merkmalen des Patentanspruches 1 gelöst.

Bei der erfindungsgemäßen antreibbaren Verbundlenkerachse, die mit einem Querprofil und jeweils endseitig des Querprofils damit verbundenen Längslenkern ausgeführt ist, ist innerhalb der Längslenker zumindest bereichsweise jeweils ein Antriebsstrang angeordnet. Zusätzlich ist die Verbundlenkerachse über die Längslenker mit einer Fahrzeugkarosserie verbindbar.

Erfindungsgemäß sind die Längslenker jeweils als zweiteiliges Gehäusegussteil mit in Längsrichtung verlaufender Gehäuseteilung ausgeführt, womit die beiden Gehäusehälften der Längslenker vorteilhafterweise mit einfacher Formgebung ausbildbar und damit besser und günstiger herstellbar sind.

Auch eine Wartung bzw. ein Service der innerhalb des Lenkergehäuses angeordneten Komponenten des Antriebsstranges sind nach der Öffnung des Gesamtteiles im Vergleich zu aus dem Stand der Technik bekannten Lösungen besser zugänglich, da während der Wartung eine Gehäusehälfte eines Längslenkers komplett vom zweiten Gehäuseteil eines Längslenkers abnehmbar ist.

Des Weiteren ist die erfindungsgemäße antreibbare Verbundlenkerachse im Vergleich zur aus dem Stand der Technik bekannten Verbundlenkerachsen durch einen geringeren Dichtaufwand im Bereich der Längslenker gekennzeichnet, da lediglich im Anlagebereich zwischen den beiden Gehäusegussteilen der Längslenker eine Abdichtung vorzusehen ist, während bekannte Lösungen, die mit mehreren Gehäusedeckeln ausgeführt sind, mehrere abzudichtende Trennfugen aufweisen.

Zusätzlich zeigen die beiden Gehäusegussteile bezüglich eines thermischen Verhaltens und auch bei anliegenden Belastungen ein gleiches Verhalten, wenn diese aus dem gleichen Werkstoff hergestellt sind.

Bei vorteilhaften Ausführungsformen der erfindungsgemäßen antreibbaren Verbundlenkerachse umfassen die Längslenker ein in Einbaulage oberes Gehäuseteil und ein unteres Gehäuseteil oder ein in Einbaulage radseitiges Gehäuseteil und ein von der Radseite des Längslenkers abgewandtes Gehäuseteil womit je nach Anwendungsfall über eine große Teilfuge in Längsrichtung der Längslenker eine linke und eine rechte bzw. eine obere und eine untere Gehäusehälfte vorliegt, deren Formgebung im Vergleich zu aus dem Stand der Technik bekannten Lösungen einfacher ausführbar ist, womit die Längslenker besser und günstiger herstellbar sind.

Umfassen die Längslenker zwei Teilungsebenen, die miteinander einen stumpfen Winkel einschließen, ist die Verbundlenkerachse mit geringem Aufwand an verschiedene Fahrzeugsysteme anpassbar.

Bei der ebenfalls mit geringem Aufwand an bestehende Fahrzeugsysteme anpassbaren Ausführungsform der erfindungsgemäßen antreibbaren Verbundlenkerachse schneiden sich die Teilungsebenen im Bereich eines Mittelpunktes einer Radachse oder einer Welle des Antriebsstranges.

Die Gehäusehälften bilden bei einer einfach und kostengünstig herstellbaren Weiterbildung der erfindungsgemäßen antreibbaren Verbundlenkerachse jeweils zumindest einen Teil einer Aufnahme für eine Lagereinrichtung, über die die Verbundlenkerachse mit einer Fahrzeugkarosserie in Wirkverbindung bringbar ist. Damit ist für die Herstellung der Aufnahme für eine Lagereinrichtung während des Gießverfahrens kein die Herstellkosten erhöhender Kern vorzusehen, der für einen weiteren Gießprozess als sogenannter verlorener Kern nicht wiederverwendbar ist.

Bilden die Gehäusehälften jeweils zumindest einen Teil einer Aufnahme für das Querprofil, ist die erfindungsgemäße antreibbare Verbundlenkerachse wiederum auf einfache und kostengünstige Art und Weise ohne verlorenen Kern herstellbar.

Bei einer mit geringem Aufwand montierbaren und konstruktiv einfachen Ausführungsform der erfindungsgemäßen antreibbaren Verbundlenkersachse ist das Querprofil mit zumindest außenseitig polygonförmig ausgeführten Endbereichen in den entsprechend polygonförmig ausgebildeten Aufnahmen der Längslenker formschlüssig angeordnet und mit den Längslenkern zumindest drehfest verbunden.

Liegt das Querprofil mit endseitigen Flanschbereichen an entsprechend flanschartig ausgeführten Bereichen der Aufnahmen der Längslenker an, ist das Querprofil auf einfache Art und Weise über Verschraubungen mit den Längslenkern verbindbar.

Sind von den Gehäusehälften der Längslenker begrenzte und wenigstens teilweise zur Aufnahme der Antriebsstränge vorgesehene Innenräume auf einer Radseite der Längslenker und/oder auf einer der Radseite abgewandten Seite der Längslenker jeweils über mit den Gehäusehälften lösbar verbundene Deckelelemente begrenzt, sind eine Montage und gegebenenfalls eine Wartung der erfindungsgemäßen antreibbaren Verbundlenkerachse gegebenenfalls weiter vereinfacht.

Der Antriebsstrang umfasst bei einer konstruktiv einfachen und mit geringem Aufwand betreibbaren Ausführungsform der erfindungsgemäßen antreibbaren Verbundlenkerachse zumindest eine elektrische Maschine.

Bei einer bauraumgünstigen Ausführungsform der erfindungsgemäßen antreibbaren Verbundlenkerachse umfasst der Antriebsstrang eine der elektrischen Maschine zugeordnete und zwischen einer Ausgangswelle der elektrischen Maschine und einer Radachse angeordnete Getriebeeinrichtung, in deren Bereich ein von der elektrischen Maschine zur Verfügung stehendes Drehmoment in gewünschtem Umfang wandelbar ist.

Sind die Ausgangswelle und die Radachse parallel zueinander verlaufend angeordnet und in Einbaulage der Verbundlenkerachse zumindest in Fahrzeuglängsrichtung zueinander beabstandet, ist die erfindungsgemäße antreibbare Verbundlenkerachse mit geringem Aufwand an zur Verfügung stehende Bauräume verschiedener Fahrzeugkonzepte anpassbar.

Bei einer einfach montier- und demontierbaren Ausführungsform der erfindungsgemäßen antreibbaren Verbundlenkerachse sind die Gehäuseteile über mehrere über den Umfang der Gehäuseteile verteilt angeordnete Schraubverbindungen miteinander verbunden.

Die Gehäuseteile sind bei einer einfach montierbaren Ausführungsform der erfindungsgemäßen antreibbaren Verbundlenkerachse über eine Zentriereinrichtung miteinander verbunden, über die die Gehäuseteile vor dem Herstellen der festen Verbindung zwischen den beiden Gehäuseteilen der Längslenker in die zueinander gewünschte Lage bringbar und ohne weitere Maßnahmen haltbar sind.

Die Längslenker stehen bei einer mit geringem Aufwand an einem Fahrzeug montierbaren Ausführungsform der erfindungsgemäßen antreibbaren Verbundlenkerachse auf ihrer Radseite jeweils mit einem Radträger in Wirkverbindung.

Ist eine Feder- und/oder eine Dämpferaufnahme jeweils einteilig mit einem der Gehäuseteile der Längslenker ausgebildet, ist eine Montage der Verbundlenkerachse vereinfacht.

Die Verbindung zwischen den als Torsionsprofil ausgeführten Querprofil und den Längslenkern der antreibbaren Verbundlenkerachse ist beispielsweise über einen Presssitz, eine Schraubverbindung oder über einen Stoffschluss realisierbar. Dabei stehen je nach gewählter Verbindungsart Vorteile, wie die Vermeidung von Wärmeeinflusszonen, Justier- und Lösbarkeit und eine kostengünstige Herstellung, Nachteile, wie die Unlösbarkeit der Verbindung, ein angeschweißter Anschraubflansch sowie Veränderung von Werkstoffkennwerten durch Wärmeeinbringung, entgegen.

Sowohl die in den Patentansprüchen angegebenen Merkmale als auch die in den nachfolgenden Ausführungsbeispielen der erfindungsgemäßen antreibbaren Verbundlenkerachse angegebenen Merkmale sind jeweils für sich alleine oder in beliebiger Kombination miteinander geeignet, den erfindungsgemäßen Gegenstand weiterzubilden.

Weiter Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
Fig. 1 einen Längslenker einer ersten Ausführungsform der erfindungsgemäßen antreibbaren Verbundlenkerachse mit einem Antriebsstrang in einer Explosionsdarstellung;
Fig. 2 den Längslenker gemäß Fig. 1 aus einer in Fig. 1 näher gekennzeichneten Ansicht II;
Fig. 3 den Längslenker gemäß Fig. 1 in einer Draufsicht;
Fig. 4 einen Längslenker einer zweiten Ausführungsform der erfindungsgemäßen antreibbaren Verbundlenkerachse in einer Explosionsdarstellung;
Fig. 5 den Längslenker gemäß Fig. 4 in einer Draufsicht; und
Fig. 6 einen Längslenker einer dritten Ausführungsform der erfindungsgemäßen antreibbaren Verbundlenkerachse in einer Explosionsdarstellung.

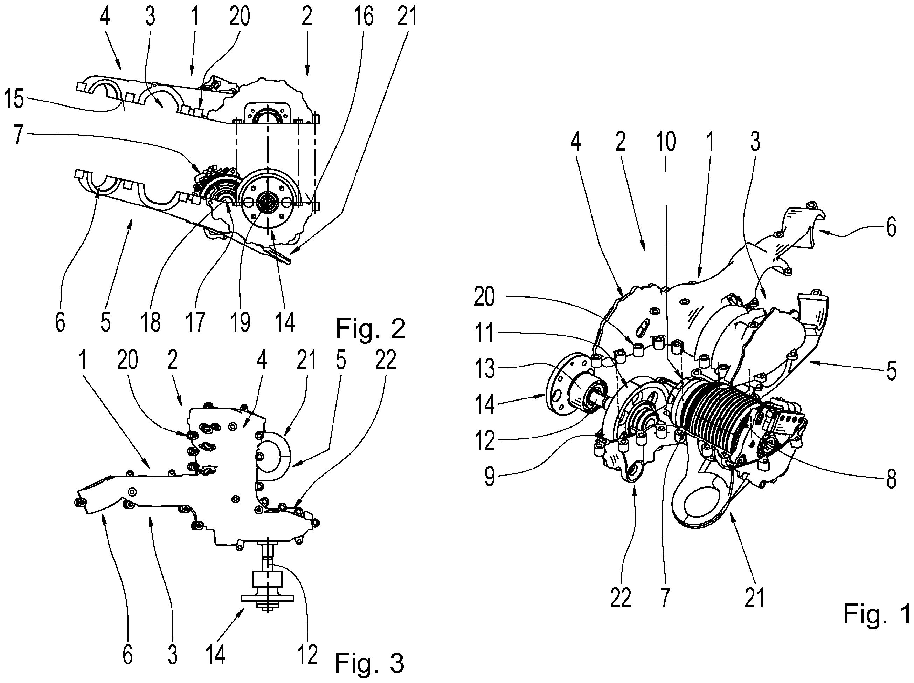

Fig. 1 zeigt einen Längslenker 1 einer ersten Ausführungsform einer antreibbaren Verbundlenkerachse 2, die in an sich bekannter Art und Weise in einem Kraftfahrzeug verwendet wird und auf jeder Fahrzeugseite einen Längslenker 2 aufweist. Die Längslenker 2 sind jeweils mit einem in Fahrzeugquerrichtung verlaufenden Querprofil verbunden.

Grundsätzlich sind die Längslenker 1 der Verbundlenkerachse 2 spiegelbildlich identisch ausgeführt, weshalb in der nachfolgenden Beschreibung lediglich auf den in Fig. 1 gezeigten Längslenker 1 weiter Bezug genommen wird.

Der Längslenker 1 ist als zweiteiliges Gehäusegussteil mit in Längsrichtung verlaufender Gehäuseteilung ausgeführt und umfasst bei dem in Fig. 1 gezeigten Ausführungsbeispiel der Verbundlenkerachse 2 in Bezug auf eine Fahrzeughochachse in Einbaulage der Verbundlenkerachse im Kraftfahrzeug ein oberes Gehäuseteil 4 und ein unteres Gehäuseteil 5, die wie auch in Fig. 2 und Fig. 3 dargestellt neben der Aufnahme 3 für das Querprofil eine weitere Aufnahme 6 für eine Lagereinrichtung bilden, über die die Verbundlenkerachse 2 mit einer Fahrzeugkarosserie in Verbindung bringbar ist. Im Bereich der weiteren Aufnahme 6 ist beispielsweise eine als Gummilager ausgeführte Lagereinrichtung einpressbar, das Dreh- und Schwenkbewegungen des Längslenkers 1 gegenüber der Fahrzeugachse innerhalb von für eine Fahrsicherheit begrenzten Dreh- und Schwenkbereichen zulässt.

Das Querprofil ist in montiertem Zustand der antreibbaren Verbundlenkerachse 2 mit zumindest außenseitig polygonförmig ausgeführten Endbereichen in den entsprechend polygonförmig ausgebildeten Aufnahmen 3 der Längslenker 1 formschlüssig angeordnet und mit den Längslenkern 1 dadurch drehfest verbunden. Zusätzlich ist eine Relativbewegung zwischen dem Querprofil und den Längslenkern in Querrichtung bzw. in Längsrichtung des Querprofils beispielsweise jeweils entweder über einen Presssitz und/oder eine Verklebung oder Verschweißung zwischen dem Querprofil und den Längslenkern 1 verhindert.

Des Weiteren begrenzen das obere Gehäuseteil 4 und das untere Gehäuseteil 5 einen Innenraum, innerhalb dem ein Antriebsstrang 7 angeordnet ist, der eine elektrische Maschine 8 und eine Getriebeeinrichtung 9 umfasst. Die Getriebeeinrichtung 9 ist mit einer Ausgangswelle der elektrischen Maschine 8 und einem damit gekoppelten Planetengetriebe 10 sowie einer damit wiederum wirkverbunden Stirnradstufe 11 ausgeführt, die mit einer Radachse 12 wirkverbunden ist. Die Ausgangswelle der elektrischen Maschine 8 und die Radachse 12 sind parallel zueinander angeordnet und in Einbaulage der Verbundlenkerachse 2 zumindest in Fahrzeuglängsrichtung zueinander beabstandet. Die Radachse 12 ist über ein Radlager 13 drehbar in den Gehäuseteilen 4 und 5 gelagert und mit einem Radträger 14 verbunden.

Der Längslenker 2 umfasst zwei Teilungsebenen 15, 16, die miteinander einen stumpfen Winkel α einschließen. Vorliegend schneiden sich die Teilungsebenen 15 und 16 im Bereich des Mittelpunktes 17 einer Welle 18 des Antriebsstranges 7, die vorliegend mit der Ausgangswelle der elektrischen Maschine 8 gekoppelt ist. In Abhängigkeit des jeweils vorliegenden Anwendungsfalles besteht auch die Möglichkeit, dass sich die Teilungsebenen 15 und 16 im Bereich des Mittelpunktes 19 der Radachse 12 schneiden.

Die Gehäuseteile 4 und 5 sind über mehrere über den Umfang der Gehäuseteile 4, 5 verteilt angeordnete Schraubverbindungen 20 in gewünschtem Umfang miteinander verbunden. Zusätzlich stehen die Gehäuseteile 4 und 5 über eine Zentriereinrichtung, vorzugsweise Zentrierstifte oder dergleichen, miteinander in Wirkverbindung, um die Gehäuseteile 4 und 5 vor dem Verschrauben ohne zusätzliche Maßnahmen zueinander ausrichten, zu justierten und anschließend mit geringem Aufwand über die Schraubverbindungen 20 fest miteinander verbinden zu können.

Des Weiteren ist eine Federaufnahme 21 und eine Dämpferaufnahme 22 einteilig mit dem unteren Gehäuseteil 5 ausgebildet, wobei die Federaufnahme und/oder die Dämpferaufnahme in Abhängigkeit des jeweils vorliegenden Anwendungsfalles auch am unteren Gehäuseteil oder am oberen Gehäuseteil des Längslenkers 1 über Verschrauben, Verkleben, Vernieten, Verschweißen oder dergleichen verbunden sein kann.

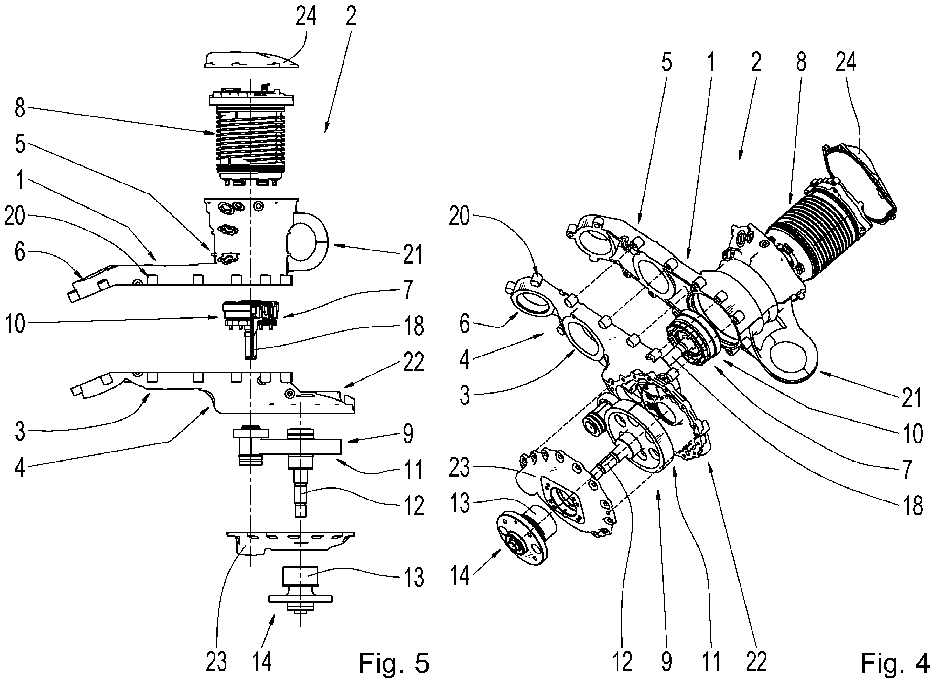

Bei dem in Fig. 4 und Fig. 5 dargestellten zweiten Ausführungsbeispiel der Verbundlenkerachse 2 ist der Längslenker 1 ebenfalls mit zwei Gehäusehälften 4, 5 und mit in Längsrichtung verlaufender Gehäuseteilung ausgeführt. Die Gehäuseteilung verläuft in Einbaulage der Verbundlenkerachse 2 gemäß Fig. 4 und Fig. 5 im Wesentlichen in vertikaler Richtung, während die Gehäuseteilung des Längslenkers 1 der Verbundlenkerachse 2 gemäß Fig. 1 bis Fig. 3 in Einbaulage im Wesentlichen in horizontaler Richtung orientiert ist. Somit umfasst der Längslenker 1 der Verbundlenkerachse 2 gemäß Fig. 4 und Fig. 5 eine der Fahrzeugmitte abgewandte bzw. eine dem Radträger 14 zugewandte Gehäusehälfte 4 und eine dem Radträger 14 abgewandte Gehäusehälfte 5, innerhalb welchen der Antriebsstrang 7 zumindest teilweise angeordnet ist. An den Gehäusehälften 4 und 5 sind auf der dem Radträger 14 zugewandten Seite und auf der dem Radträger abgewandten Seite jeweils über Schraubverbindungen Deckelelemente 23, 24 befestigbar, die bei der ersten Ausführungsform der Verbundlenkerachse gemäß Fig. 1 bis Fig. 3 einstückig mit den Gehäusehälften 4 und 5 ausgebildet sind.

Die Federaufnahme 21 ist mit der Gehäusehälfte 5 einstückig verbunden, während die Dämpferaufnahme 22 mit der Gehäusehälfte 4 einteilig ausgeführt ist. Sowohl zwischen den Gehäusehälften 4 und 5 als auch zwischen der Gehäusehälfte 4 und dem Deckelelement 23 sowie zwischen der Gehäusehälfte 5 und dem weiteren Deckelelement 24 sind jeweils Dichteinrichtungen vorgesehen, um den von den Gehäusehälften 4 und 5 und den Deckelelementen 23 und 24 begrenzten Innenraum des Längslenkers 1 in gewünschtem Umfang gegenüber der Umgebung abzudichten.

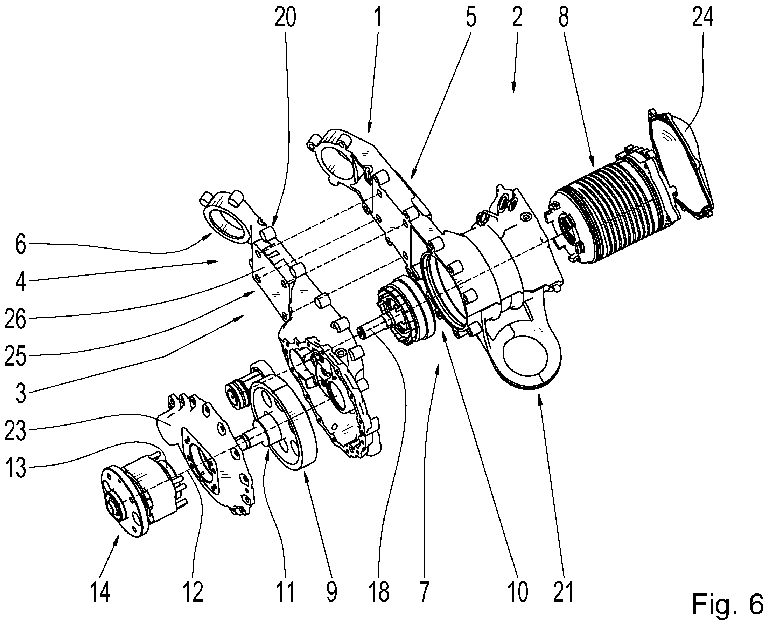

Der Längslenker 1 des in Fig. 6 gezeigten dritten Ausführungsbeispiels der antreibbaren Verbundlenkerachse 2 entspricht im Wesentlichen dem Längslenker 1 des zweiten Ausführungsbeispiels der Verbundlenkerachse 1 gemäß Fig. 4. Lediglich im Bereich der Aufnahme 3 sind die beiden Längslenker 1 unterschiedlich ausgeführt, weshalb in der nachfolgenden Beschreibung zu Fig. 6 im Wesentlichen auf die Unterschiede zwischen dem dritten Ausführungsbeispiel und dem zweiten Ausführungsbeispiel der Verbundlenkerachse 2 näher eingegangen wird und bezüglich des weiteren Aufbaus der Längslenker 1 der Verbundlenkerachse 2 gemäß Fig. 6 auf die vorstehende Beschreibung verwiesen wird.

Bei dem dritten Ausführungsbeispiel der Verbundlenkerachse 2 liegt das Querprofil in montiertem Zustand der Verbundlenkerachse 2 mit endseitigen Flanschbereichen an entsprechend flanschartig ausgeführten Bereichen 25 der Aufnahmen 3 der Längslenker 1 an und ist mit den Längslenkern 1 über Verschraubungen fest verbunden. Dabei umfassen die Aufnahmen 3 bzw. deren flanschartige Bereiche 25 ebene und vorliegend geschlossene Flanschflächen 26, an welchen die Flanschbereiche des Querprofils jeweils anliegen. Die geschlossenen Flanschflächen 26 stellen somit einerseits Anlageflächen für das Querprofil und andererseits Dichtflächen für einen Hohlraum des als Hohlkörper ausgeführten Querprofils dar, womit ein Eindringen von Korrosion im Bereich des Querprofils begünstigenden Medien, wie Salzwasser und dergleichen, in das Innere des Querprofils auf einfache Art und Weise verhindert wird.

### Bezugszeichen

- 1: Längslenker
- 2: Verbundlenkerachse
- 3: Aufnahme
- 4: oberes Gehäuseteil
- 5: unteres Gehäuseteil
- 6: weitere Aufnahme
- 7: Antriebsstrang
- 8: elektrische Maschine
- 9: Getriebeeinrichtung
- 10: Planetengetriebe
- 11: Stirnradstufe
- 12: Radachse
- 13: Radlager
- 14: Radträger
- 15, 16: Teilungsebene
- 17: Mittelpunkt
- 18: Welle
- 19: Mittelpunkt der Radachse
- 20: Schraubverbindung
- 21: Federaufnahme
- 22: Dämpferaufnahme
- 23, 24: Deckelelement
- 25: Bereich
- 26: Flanschfläche

## Patentansprüche

1. Antreibbare Verbundlenkerachse (2) mit einem Querprofil und jeweils endseitig des Querprofils damit verbundenen Längslenkern (1), innerhalb welchen zumindest bereichsweise jeweils ein Antriebsstrang (7) angeordnet ist und über die die Verbundlenkerachse (2) mit einer Fahrzeugkarosserie verbindbar ist, **dadurch gekennzeichnet, dass** die Längslenker (1) jeweils als zweiteiliges Gehäusegussteil mit in Längsrichtung verlaufender Gehäuseteilung ausgeführt sind.

2. Antreibbare Verbundlenkerachse nach Anspruch 1, **dadurch gekennzeichnet, dass** die Längslenker (1) ein in Einbaulage oberes Gehäuseteil (4) und ein unteres Gehäuseteil (5) umfassen.

3. Antreibbare Verbundlenkerachse nach Anspruch 1, **dadurch gekennzeichnet, dass** die Längslenker (1) ein in Einbaulage radseitiges Gehäuseteil (4) und ein von der Radseite des Längslenkers abgewandtes Gehäuseteil (5) umfassen.

4. Antreibbare Verbundlenkerachse nach Anspruch 1 oder 2, **dadurch gekennzeichnet, dass** die Längslenker (1) zwei Teilungsebenen (15, 16) umfassen, die miteinander einen stumpfen Winkel (α) einschließen.

5. Antreibbare Verbundlenkerachse nach Anspruch 3, **dadurch gekennzeichnet, dass** die Teilungsebenen (15, 16) sich im Bereich eines Mittelpunktes (17) einer Radachse (12) oder einer Welle (18) des Antriebsstranges (7) schneiden.

6. Antreibbare Verbundlenkerachse nach einem der Ansprüche 2 bis 5, **dadurch gekennzeichnet, dass** die Gehäuseteile (4, 5) jeweils zumindest einen Teil einer Aufnahme (6) für eine Lagereinrichtung bilden, über die die Verbundlenkerachse (2) mit einer Fahrzeugkarosserie in Verbindung bringbar ist.

7. Antreibbare Verbundlenkerachse nach einem der Ansprüche 2 bis 6, **dadurch gekennzeichnet, dass** die Gehäuseteile (4, 5) jeweils zumindest einen Teil einer Aufnahme (3) für das Querprofil bilden.

8. Antreibbare Verbundlenkersachse nach Anspruch 7, **dadurch gekennzeichnet, dass** das Querprofil mit zumindest außenseitig polygonförmig ausgeführten Endbereichen in den entsprechend polygonförmig ausgebildeten Aufnahmen (3) der Längslenker (1) formschlüssig angeordnet und mit den Längslenkern (1) zumindest drehfest verbunden ist.

9. Antreibbare Verbundlenkersachse nach Anspruch 7 oder 8, **dadurch gekennzeichnet, dass** Querprofil mit endseitigen Flanschbereichen an entsprechend flanschartig ausgeführten Bereichen der Aufnahmen (3) der Längslenker (1) anliegt und mit den Längslenkern (1) über Verschraubungen verbunden ist.

10. Antreibbare Verbundlenkersachse nach einem der Ansprüche 2 bis 9, **dadurch gekennzeichnet, dass** von den Gehäuseteilen (4, 5) der Längslenker (1) begrenzte und wenigstens teilweise zur Aufnahme des Antriebsstranges (7) vorgesehene Innenräume auf einer Radseite der Längslenker (1) und/oder auf einer der Radseite abgewandten Seite der Längslenker (1) jeweils über mit den Gehäuseteilen (4, 5) lösbar verbundene Deckelelemente (23, 24) begrenzt sind.

11. Antreibbare Verbundlenkerachse nach einem der Ansprüche 1 bis 10, **dadurch gekennzeichnet, dass** der Antriebsstrang (7) zumindest eine elektrische Maschine (8) umfasst.

12. Antreibbare Verbundlenkerachse nach Anspruch 11, **dadurch gekennzeichnet, dass** der Antriebsstrang (7) eine der elektrischen Maschine (8) zugeordnete und zwischen einer Ausgangswelle der elektrischen Maschine (8) und der Radachse (12) angeordnete Getriebeeinrichtung (9) umfasst.

13. Antreibbare Verbundlenkerachse nach einem der Ansprüche 5 bis 12, **dadurch gekennzeichnet, dass** die Ausgangswelle der elektrischen Maschine (8) und die Radachse (12) parallel zueinander verlaufend angeordnet sind und in Einbaulage der Verbundlenkerachse (2) zumindest in Fahrzeuglängsrichtung zueinander beabstandet sind.

14. Antreibbare Verbundlenkerachse nach einem der Ansprüche 2 bis 13, **dadurch gekennzeichnet, dass** die Gehäuseteile (4, 5) über mehrere über den Umfang der Gehäuseteile (4, 5) verteilt angeordnete Schraubverbindungen (20) miteinander verbunden sind.

15. Antreibbare Verbundlenkerachse nach einem der Ansprüche 2 bis 14, **dadurch gekennzeichnet, dass** die Gehäuseteile (4, 5) über eine Zentriereinrichtung miteinander verbunden sind.

16. Antreibbare Verbundlenkerachse nach einem der Ansprüche 1 bis 15, **dadurch gekennzeichnet, dass** die Längslenker (1) auf ihrer Radseite jeweils mit einem Radträger (14) in Wirkverbindung stehen.

17. Antreibbare Verbundlenkerachse nach einem der Ansprüche 2 bis 16, **dadurch gekennzeichnet, dass** eine Feder- und/oder eine Dämpferaufnahme (21, 22) einteilig mit einem der Gehäuseteile (4, 5) ausgebildet ist.

## Claims

1. Drivable torsion beam axle (2) having a transverse profile and trailing arms (1) which are connected in each case to the transverse profile on the end side thereof, within which trailing arms (1) in each case one drive train (7) is arranged at least in regions, and via which trailing arms (1) the torsion beam axle (2) can be connected to a vehicle body, **characterized in that** the trailing arms (1) are configured in each case as a two-piece cast housing part with a housing split which runs in the longitudinal direction.

2. Drivable torsion beam axle according to Claim 1, **characterized in that** the trailing arms (1) comprise an upper (in the installed position) housing part (4) and a lower housing part (5).

3. Drivable torsion beam axle according to Claim 1, **characterized in that** the trailing arms (1) comprise a wheel-side (in the installed position) housing part (4) and a housing part (5) which faces away from the wheel side of the trailing arm.

4. Drivable torsion beam axle according to Claim 1 or 2, **characterized in that** the trailing arms (1) comprise two dividing planes (15, 16) which enclose an obtuse angle (α) with one another.

5. Drivable torsion beam axle according to Claim 3, **characterized in that** the dividing planes (15, 16) intersect in the region of a centre point (17) of a wheel axle (12) or a shaft (18) of the drive train (7).

6. Drivable torsion beam axle according to one of Claims 2 to 5, **characterized in that** the housing parts (4, 5) form in each case at least one part of a seat (6) for a bearing device, via which the torsion beam axle (2) can be connected to a vehicle body.

7. Drivable torsion beam axle according to one of Claims 2 to 6, **characterized in that** the housing parts (4, 5) form in each case at least one part of a seat (3) for the transverse profile.

8. Drivable torsion beam axle according to Claim 7, **characterized in that** the transverse profile is arranged by way of end regions of polygonal configuration at least on the outer side in the seats (3) of correspondingly polygonal configuration of the trailing arms (1), and is connected to the trailing arms (1) at least non-rotatably.

9. Drivable torsion beam axle according to Claim 7 or 8, **characterized in that** the transverse profile bears with end-side flanged regions against regions of correspondingly flange-like configuration of the seats (3) of the trailing arms (1), and is connected to the trailing arms (1) via screw connections.

10. Drivable torsion beam axle according to one of Claims 2 to 9, **characterized in that** interior spaces which are delimited by the housing parts (4, 5) of the trailing arms (1) and are provided at least partially for receiving the drive train (7) are delimited on a wheel side of the trailing arms (1) and/or on a side of the trailing arms (1) which faces away from the wheel side in each case via cover elements (23, 24) which are connected releasably to the housing parts (4, 5).

11. Drivable torsion beam axle according to one of Claims 1 to 10, **characterized in that** the drive train (7) comprises at least one electric machine (8).

12. Drivable torsion beam axle according to Claim 11, **characterized in that** the drive train (7) comprises a transmission device (9) which is assigned to the electric machine (8) and is arranged between an output shaft of the electric machine (8) and the wheel axle (12) .

13. Drivable torsion beam axle according to one of Claims 5 to 12, **characterized in that** the output shaft of the electric machine (8) and the wheel axle (12) are arranged so as to run parallel to one another, and are spaced apart from one another at least in the vehicle longitudinal direction in the installed position of the torsion beam axle (2).

14. Drivable torsion beam axle according to one of Claims 2 to 13, **characterized in that** the housing parts (4, 5) are connected to one another via a plurality of screw connections (20) which are arranged distributed over the circumference of the housing parts (4, 5).

15. Drivable torsion beam axle according to one of Claims 2 to 14, **characterized in that** the housing parts (4, 5) are connected to one another via a centring device.

16. Drivable torsion beam axle according to one of Claims 1 to 15, **characterized in that** the trailing arms (1) are operatively connected on the wheel side in each case to a wheel support (14).

17. Drivable torsion beam axle according to one of Claims 2 to 16, **characterized in that** a spring and/or a damper support (21, 22) is configured in one piece with one of the housing parts (4, 5).

## Revendications

1. Essieu à traverse déformable en torsion (2) pouvant être entraîné, comprenant un profilé transversal ainsi que des bras oscillants longitudinaux (1) raccordés à celui-ci à chaque fois du côté de l'extrémité du profilé transversal, à l'intérieur desquels est disposée au moins en partie à chaque fois une chaîne cinématique (7) et par le biais desquels l'essieu à traverse déformable en torsion (2) peut être raccordé à une carrosserie de véhicule, **caractérisé en ce que** les bras oscillants longitudinaux (1) sont réalisés à chaque fois sous forme de pièce de boîtier coulée en deux parties avec une division du boîtier s'étendant dans la direction longitudinale.

2. Essieu à traverse déformable en torsion pouvant être entraîné selon la revendication 1, **caractérisé en ce que** les bras oscillants longitudinaux (1) comprennent, dans la position d'installation, une partie de boîtier supérieure (4) et une partie de boîtier inférieure (5).

3. Essieu à traverse déformable en torsion pouvant être entraîné selon la revendication 1, **caractérisé en ce que** les bras oscillants longitudinaux (1) comprennent, dans la position d'installation, une partie de boîtier côté roue (4) et une partie de boîtier (5) opposée au côté roue du bras oscillant longitudinal.

4. Essieu à traverse déformable en torsion pouvant être entraîné selon la revendication 1 ou 2, **caractérisé en ce que** les bras oscillants longitudinaux (1) comprennent deux plans de séparation (15, 16) qui forment ensemble un angle obtus (α).

5. Essieu à traverse déformable en torsion pouvant être entraîné selon la revendication 3, **caractérisé en ce que** les plans de séparation (15, 16) se coupent dans la région d'un centre (17) d'un essieu de roue (12) ou d'un arbre (18) de la chaîne cinématique (7).

6. Essieu à traverse déformable en torsion pouvant être entraîné selon l'une quelconque des revendications 2 à 5, **caractérisé en ce que** les parties de boîtier (4, 5) forment à chaque fois au moins une partie d'un logement (6) pour un système de palier, par le biais duquel l'essieu à traverse déformable en torsion (2) peut être amené en liaison avec une carrosserie de véhicule.

7. Essieu à traverse déformable en torsion pouvant être entraîné selon l'une quelconque des revendications 2 à 6, **caractérisé en ce que** les parties de boîtier (4, 5) forment à chaque fois au moins une partie d'un logement (3) pour le profilé transversal.

8. Essieu à traverse déformable en torsion pouvant être entraîné selon la revendication 7, **caractérisé en ce que** le profilé transversal est disposé par engagement par correspondance de formes avec des régions d'extrémité réalisées sous forme polygonale au moins du côté extérieur dans les logements (3) des bras oscillants longitudinaux (1) réalisés de manière correspondante sous forme polygonale, et est raccordé de manière au moins solidaire en rotation aux bras oscillants longitudinaux (1).

9. Essieu à traverse déformable en torsion pouvant être entraîné selon la revendication 7 ou 8, **caractérisé en ce que** le profilé transversal avec des régions de bride du côté de l'extrémité s'applique contre des régions des logements (3) des bras oscillants longitudinaux (1), réalisées de manière correspondante en forme de brides, et est raccordé aux bras oscillants longitudinaux (1) par le biais de vissages.

10. Essieu à traverse déformable en torsion pouvant être entraîné selon l'une quelconque des revendications 2 à 9, **caractérisé en ce que** des espaces internes limités par les parties de boîtier (4, 5) des bras oscillants longitudinaux (1) et prévus au moins en partie pour recevoir la chaîne cinématique (7) sont limités sur un côté de roue des bras oscillants longitudinaux (1) et/ou sur un côté des bras oscillants longitudinaux (1) opposé au côté de roue à chaque fois par le biais d'éléments de coiffe (23, 24) connectés de manière amovible aux parties de boîtier (4, 5).

11. Essieu à traverse déformable en torsion pouvant être entraîné selon l'une quelconque des revendications 1 à 10, **caractérisé en ce que** la chaîne cinématique (7) comprend au moins une machine électrique (8).

12. Essieu à traverse déformable en torsion pouvant être entraîné selon la revendication 11, **caractérisé en ce que** la chaîne cinématique (7) comprend un système de transmission (9) associé à la machine électrique (8) et disposé entre un arbre de sortie de la machine électrique (8) et l'essieu de roue (12).

13. Essieu à traverse déformable en torsion pouvant être entraîné selon l'une quelconque des revendications 5 à 12, **caractérisé en ce que** l'arbre de sortie de la machine électrique (8) et l'essieu de roue (12) sont disposés de manière à s'étendre parallèlement l'un à l'autre et sont espacés l'un de l'autre au moins dans la direction longitudinale du véhicule dans la position d'installation de l'essieu à traverse déformable en torsion (2).

14. Essieu à traverse déformable en torsion pouvant être entraîné selon l'une quelconque des revendications 2 à 13, **caractérisé en ce que** les parties de boîtier (4, 5) sont raccordées l'une à l'autre par le biais de plusieurs connexions vissées (20) disposées de manière répartie sur la périphérie des parties de boîtier (4, 5).

15. Essieu à traverse déformable en torsion pouvant être entraîné selon l'une quelconque des revendications 2 à 14, **caractérisé en ce que** les parties de boîtier (4, 5) sont raccordées l'une à l'autre par le biais d'un système de centrage.

16. Essieu à traverse déformable en torsion pouvant être entraîné selon l'une quelconque des revendications 1 à 15, **caractérisé en ce que** les bras oscillants longitudinaux (1) sont en liaison fonctionnelle sur leur côté roue à chaque fois avec un support de roue (14).

17. Essieu à traverse déformable en torsion pouvant être entraîné selon l'une quelconque des revendications 2 à 16, **caractérisé en ce qu'**un logement de ressort et/ou d'amortisseur (21, 22) est réalisé d'une seule pièce avec l'une des parties de boîtier (4, 5).
